# EUROPÄISCHE PATENTANMELDUNG

(11) **EP 2 019 084 A2**
(43) Veröffentlichungstag der Anmeldung: **28.01.2009**
(21) Anmeldenummer: 08011981.1
(22) Anmeldetag: 03.07.2008
(51) Int. Cl.: C01B 33/027

(54) **Verfahren und Reaktor zur Herstellung von Silizium**

(30) Priorität: 27.07.2007 DE 102007035757
(71) Anmelder: Joint Solar Silicon GmbH & Co. KG, 09599 Freiberg (DE)
(72) Erfinder: Müller, Armin, Dr., 09599 Freiberg (DE); Sonnenschein, Raymund, Dr., 60594 Frankfurt (DE); Piotraschke, Jens, Dr., 01640 Coswig (DE); Sill, Torsten, Dr., 09599 Freiberg (DE); Beyer, Christian, Dr., 09599 Freiberg (DE); Kaden, Dietmar, 09619 Mulda (DE); Gölz, Andreas, 79650 Schopfheim (DE)
(74) Vertreter: Rau, Albrecht

(57) **Zusammenfassung**

Bei einem Verfahren und einem Reaktor (1) zur Herstellung von Silizium ist eine Induktions-Vorrichtung (13) vorgesehen, die pulverförmige Siliziumpartikel (11) in einem freien Schmelzraum (6) des Reaktors (1) mittels sich in den pulverförmigen Siliziumpartikeln (11) ausbildenden Wirbelströmen induktiv aufschmilzt. Die aus den Siliziumpartikeln (11) entstehenden Siliziumtröpfchen (16) verbinden sich zu Siliziumtropfen (17), die in einem Erstarrungsraum (7) zu hochreinen und unmittelbar weiterverarbeitbaren Siliziumstücken (18) erstarrt werden.

## Beschreibung

Die Erfindung betrifft ein Verfahren zur Herstellung von Silizium, insbesondere von Reinstsilizium für die Photovoltaik- und Halbleiterindustrie. Ferner betrifft die Erfindung einen Reaktor zur Herstellung von Silizium, insbesondere von Reinstsilizium für die Photovoltaik- und Halbleiterindustrie.

Aus der DE 10 2004 027 563 A1 ist ein Herstellungsverfahren für Silizium bekannt, bei dem ein Monosilan-Wasserstoff-Gemisch thermisch zersetzt wird und Siliziumpulver entsteht. Bei dem Herstellungsverfahren wird die Pyrolysetendenz des Monosilans genutzt und Siliziumpulver direkt aus der Gasphase abgeschieden. Das homogene Abscheiden von Siliziumpulver aus der Gasphase wird auch als Chemical Vapor Deposition CVD bezeichnet. Durch ein mechanisches Verdichten wird ein günstigeres Einschmelzverhalten des Siliziumpulvers erzielt. Nachteilig bei diesem Verfahren ist, dass das mechanische Verdichten des abgeschiedenen Siliziumpulvers apparativ aufwändig ist.

Aus der US 4 354 987 ist ein Verfahren zur Herstellung von Silizium bekannt, bei dem aus der Gasphase abgeschiedenes Siliziumpulver in einen Behälter mit flüssigem Silizium eingeleitet und aufgeschmolzen wird. Der Behälter ist von einem Karbon- oder Graphitblock umgeben, der mittels Induktionsspulen beheizt wird. Unterhalb des Behälters ist ein gekühltes Fallrohr angeordnet, in das flüssiges Silizium aus dem Behälter tropft und dort zu Siliziumstücken erstarrt. Nachteilig ist, dass dieses Verfahren energetisch und apparativ aufwändig ist.

Der Erfindung liegt die Aufgabe zugrunde, ein Verfahren und einen entsprechenden Reaktor zur einfachen und energiesparenden Herstellung von in der Photovoltaik unmittelbar weiterverarbeitbarem Silizium zu schaffen.

Diese Aufgabe wird durch die Merkmale der unabhängigen Ansprüche 1 und 9 gelöst. Der Kern der Erfindung besteht darin, dass die pulverförmigen Siliziumpartikel unmittelbar nach ihrer Bildung in dem Reaktor in einen freien Schmelzraum überführt werden, wobei die pulverförmigen Siliziumpartikel in dem freien Schmelzraum vollständig induktiv geschmolzen werden. Dadurch, dass die pulverförmigen Siliziumpartikel ummittelbar nach ihrer Bildung eine hohe Temperatur und infolge dessen eine hohe Leitfähigkeit aufweisen, können in den pulverförmigen Siliziumpartikeln Wirbelströme induziert werden, die zu einer schnellen Temperaturerhöhung der pulverförmigen Siliziumpartikel und somit zu dem Schmelzen führen. Die pulverförmigen Siliziumpartikel werden somit energiesparend zu flüssigen Siliziumtröpfchen geschmolzen. Die flüssigen Siliziumtröpfchen verbinden sich infolge von Kohäsionskräften zu größeren Siliziumtropfen. Die flüssigen Siliziumtropfen werden in dem Reaktor in einen Erstarrungsraum überführt, wo die flüssigen Siliziumtropfen zu festen Siliziumstücken erstarren. Dadurch, dass der Schmelzraum frei ausgebildet ist, erfolgt das Aufschmelzen der pulverförmigen Siliziumpartikel mit einem minimalen apparativen Aufwand. Insbesondere ist ein Behälter zum Schmelzen der Siliziumpartikel - wie dies in der US 4 354 987 vorgesehen ist - nicht erforderlich.

Die Größe der erstarrten Siliziumstücke lässt sich durch die physikalischen Bedingungen im Erstarrungsraum einstellen. Die Durchmesser der erstarrten Siliziumstücke liegen in Abhängigkeit der physikalischen Bedingungen im Erstarrungsraum zwischen 0,01 mm bis 50 mm, insbesondere zwischen 0,05 mm und 20 mm, und insbesondere zwischen 0,1 und 10 mm. Die erstarrten Siliziumstücke sind hochrein und somit unmittelbar für die Weiterverarbeitung in der Photovoltaik geeignet. Die Siliziumstücke weisen insbesondere keine Siliziumdioxidverbindungen auf. Der Kohlenstoffgehalt in den Siliziumstücken beträgt weniger als 10 ppm, und insbesondere weniger als 1 ppm. Die erstarrten Siliziumstücke sind kernlos und weisen keine störenden Gaseinschlüsse auf, wie dies beispielsweise bei der Herstellung von Silizium in Wirbelbett- oder Fließbettreaktoren auftritt. Aufgrund der kompakten und massiven Struktur der Siliziumstücke sowie deren hoher Reinheit, insbesondere deren niedrigen Kohlenstoffgehalts, eignen sich die Siliziumstücke unmittelbar zur Weiterverarbeitung zu poly- sowie einkristallinen Silizium-Wafern für die Photovoltaik. Insbesondere schmelzen die Siliziumstücke aufgrund ihrer Struktur gleichmäßig auf.

Weitere vorteilhafte Ausgestaltungen der Erfindung ergeben sich aus den Unteransprüchen.

Zusätzliche Merkmale, Einzelheiten und Vorteile der Erfindung ergeben sich aus der nachfolgenden Beschreibung eines bevorzugten Ausführungsbeispiels anhand der Zeichnung.

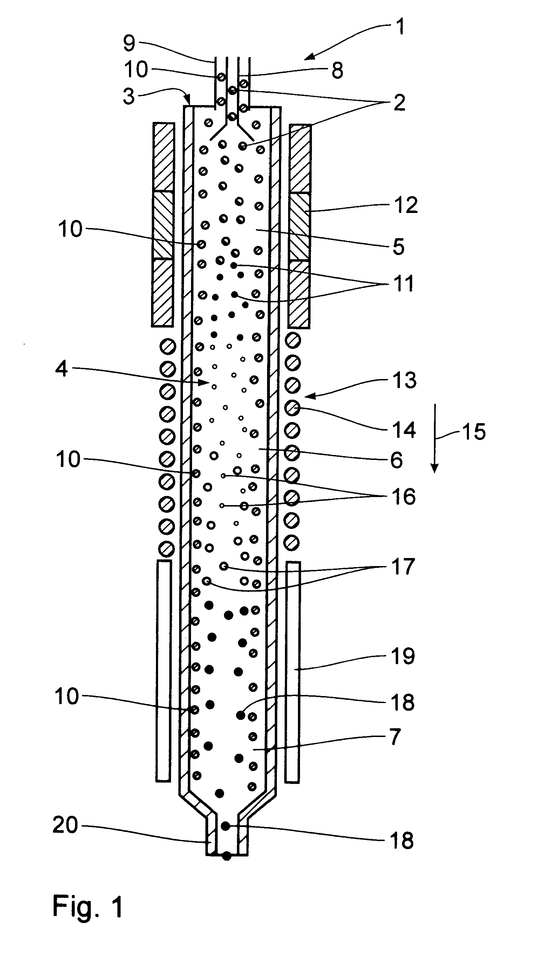

Fig. 1 zeigt einen Längsschnitt durch einen erfindungsgemäßen Reaktor zur Herstellung von Silizium.

Ein Reaktor 1 weist zur Aufnahme eines Silizium enthaltenden Gases 2 einen Reaktor-Behälter 3 auf. Der Reaktor 1 ist vorzugsweise als Rohrreaktor mit einem rohrförmigen Reaktor-Behälter 3 aus Quarzglas oder Graphit ausgebildet. Das Silizium enthaltende Gas 2 ist vorzugsweise ein Silan, beispielsweise Monosilan und/oder ein Halogensilan. Der Reaktor-Behälter 3 begrenzt einen Reaktor-Innenraum 4, der in einen Heizraum 5, einen freien Schmelzraum 6 und einen Erstarrungsraum 7 unterteilt ist.

Zum Einbringen des Gases 2 in den Reaktor-Innenraum 4 ist eine Gas-Zuführ-Leitung 8 an einem oberen Ende des Reaktor-Behälters 3 angeordnet, die in den Reaktor-Innenraum 4 mündet. Die Gas-Zuführ-Leitung 8 ist von einer ringförmigen Hilfsgas-Zufiihr-Leitung 9 umgeben, die zum Einleiten eines inerten Hilfsgases 10 dient. Bei dem inerten Hilfsgas 10 handelt es sich beispielsweise um Wasserstoff. Alternativ kann das Hilfsgas 10 seitlich zugeführt werden, beispielsweise über mehrere seitlich in den Reaktor-Innenraum 4 mündende Hilfsgas-Zufiihr-Leitungen 9 oder über einen seitlich porös oder gelocht ausgebildeten Reaktor-Behälter 3.

Zum thermischen Zersetzen des Gases 2 zu pulverförmigen Siliziumpartikeln 11 ist eine Heiz-Vorrichtung 12 vorgesehen, die außerhalb des Reaktor-Behälters 3 den Heizraum 5 umgibt. Die Heiz-Vorrichtung 12 ist elektrisch ausgebildet und umgibt den Reaktor-Behälter 3 im Bereich des Heizraums 5 ringzylindrisch.

Zum induktiven Schmelzen der pulverförmigen Siliziumpartikel 11 ist eine Induktions-Vorrichtung 13 vorgesehen, die den freien Schmelzraum 6 außerhalb des Reaktor-Behälters 3 umgibt. Die Induktions-Vorrichtung 13 weist eine Spule 14 mit N Windungen auf, die an eine nicht dargestellte Spannungsquelle angeschlossen ist. Die Induktions-Vorrichtung 13 ist in einer Prozessrichtung 15 der Heiz-Vorrichtung 12 unmittelbar nachgeordnet, so dass sich der freie Schmelzraum 6 unmittelbar an den Heizraum 5 anschließt. Die Induktions-vorrichtung 13 dient zum vollständigen Aufschmelzen der pulverförmigen Siliziumpartikel 11 zu flüssigen Siliziumtröpfchen 16 mittels sich in den pulverförmigen Siliziumpartikeln 11 ausbildenden Wirbelströmen.

Zum Erstarren von aus den Siliziumtröpfchen 16 gebildeten Siliziumtropfen 17 zu festen Siliziumstücken 18 ist eine Kühl-Vorrichtung 19 vorgesehen, die den Erstarrungsraum 7 außerhalb des Reaktor-Behälters 3 umgibt. Die Kühl-Vorrichtung 19 ist in der Prozessrichtung 15 der Induktions-Vorrichtung 13 unmittelbar nachgeordnet, so dass sich der Erstarrungsraum 7 unmittelbar an den freien Schmelzraum 6 anschließt. Die Kühl-Vorrichtung 19 ist als Kühl-Leitung ausgebildet, die den Reaktor-Behälter 3 spiralförmig umgibt und von Wasser durchströmt ist.

An einem unteren Ende des Reaktor-Behälters 3 ist eine Austrags-Leitung 20 zum Austragen der festen Siliziumstücke 18 und eines nicht dargestellten Rest-Gas-Gemisches angeordnet. Die Austrags-Leitung 20 mündet in eine nicht dargestellte Trenn-Vorrichtung, mittels der die Siliziumstücke 18 von dem Rest-Gas-Gemisch abgetrennt werden.

Nachfolgend wird die Funktionsweise des Reaktors 1 beschrieben. Durch die Gas-Zuführ-Leitung 8 wird das Silizium enthaltende Gas 2, beispielsweise Monosilan, in den Reaktor-Innenraum 4 eingebracht. Zusätzlich wird über die Hilfsgas-Zuführ-Leitung 9 das Hilfsgas 10, beispielsweise Wasserstoff, in den Reaktor-Innenraum 4 eingeleitet, wobei das Hilfsgas 10 das Gas 2 ringförmig umströmt. Durch das ringförmige Umströmen des Gases 2 verhindert das Hilfsgas 10, dass Silizium an dem Reaktor-Behälter 3 abgeschieden oder abgelagert wird. Das Gas 2 durchströmt zunächst den Heizraum 5, in dem aufgrund der Heiz-Vorrichtung 12 eine ReaktionsTemperatur T_{R} derart herrscht, dass das Gas 2 unter Bildung von pulverförmigen Siliziumpartikeln 11 thermisch zersetzt wird. Die Siliziumpartikel 11 werden homogen aus der Gasphase abgeschieden, was auch als Chemical Vapor Deposition CVD bekannt ist.

Dadurch, dass der freie Schmelzraum 6 dem Heizraum 5 unmittelbar nachgeordnet ist, werden die kontinuierlich erzeugten pulverförmigen Siliziumpartikel 11 unmittelbar nach ihrer Bildung in den freien Schmelzraum 6 überführt. Die pulverförmigen Siliziumpartikel 11 weisen beim Eintreten in den freien Schmelzraum 6 eine Einkopplungs-Temperatur T von mindestens 500°C, insbesondere von mindestens 750°C, und insbesondere von 1000°C auf. Dadurch, dass die Siliziumpartikel 11 unmittelbar nach ihrer Bildung in den freien Schmelzraum 6 eintreten, weisen diese aufgrund der hohen Einkopplungs-Temperatur T eine hohe Leitfähigkeit auf.

Die Induktions-Vorrichtung 13 erzeugt ein Magnetfeld, das den freien Schmelzraum 6 vollständig durchsetzt. Das von der Induktions-Vorrichtung 13 erzeugte Magnetfeld ändert sich zeitlich periodisch mit einer Frequenz von 50 Hz bis 5000 kHz, insbesondere von 50 Hz bis 3000 kHz, und insbesondere von 50 Hz bis 2000 kHz. Das Magnetfeld induziert in den Siliziumpartikeln 11 - begünstigt durch die hohe Leitfähigkeit - Wirbelströme, die aufgrund des ohmschen Widerstandes der Siliziumpartikel 11 zu einer Temperaturerhöhung der Siliziumpartikel 11 führen. Die Temperatur der Siliziumpartikel 11 erhöht sich in Folge der induzierten Wirbelströme derart, dass die Siliziumpartikel 11 vollständig induktiv geschmolzen werden. Die durch das Schmelzen der Siliziumpartikel 11 entstehenden Siliziumtröpfchen 16 verbinden sich infolge von Kohäsion zu größeren Siliziumtropfen 17. Dies geschieht idealerweise vollständig in dem freien Schmelzraum 6.

Nach der Bildung der Siliziumtropfen 17 treten diese in den Erstarrungsraum 7 ein. Der Erstarrungsraum 7 wird von der Kühl-Vorrichtung 19 gekühlt, wobei in dem Erstarrungsraum 7 eine Kühl-Temperatur T_{K} von weniger als 1410°C, insbesondere von weniger als 600°C, und insbesondere von weniger als 200°C, herrscht. Die Siliziumtropfen 17 erstarren in dem Erstarrungsraum 7 zu festen Siliziumstücken. Durch die physikalischen Bedingungen beim Erstarren kann die Größenverteilung der aus den flüssigen Siliziumtropfen 17 erstarrten Siliziumstücke 18 gesteuert werden. Die Größenverteilung kann insbesondere durch die Kühl-Temperatur T_{K}, den Druck p im Erstarrungsraum 7 und die Fließgeschwindigkeit der Siliziumtropfen 17 gesteuert werden. Der Druck p in dem Erstarrungsraum 7 beträgt mindestens 1100 mbar, insbesondere mindestens 600 mbar, und insbesondere mindestens 200 mbar. Die Siliziumtropfen 17 werden in dem Erstarrungsraum 7 vollständig zu Siliziumstücken 18 erstarrt, wobei die Siliziumstücke 18 wesentlich größer als die Siliziumpartikel 11 sind.

Die Siliziumstücke 18 und ein Rest-Gas-Gemisch werden durch die Austrags-Leitung 20 aus dem Reaktor-Innenraum 4 ausgetragen und einer Trenn-Vorrichtung zugeführt, wo die Siliziumstücke 18 von dem Rest-Gas-Gemisch getrennt werden.

Die Siliziumstücke 18 sind kernlos und weisen eine kompakte sowie massive Struktur auf. Die Siliziumstücke 18 weisen in Abhängigkeit der physikalischen Bedingungen in dem Erstarrungsraum 7 einen Durchmesser zwischen 0,01 mm bis 50 mm, insbesondere zwischen 0,05 mm und 20 mm, und insbesondere zwischen 0,1 mm bis 10 mm auf. Die Siliziumstücke 18 können eine regelmäßige und/oder unregelmäßige Form haben. Die Siliziumstücke 18 enthalten keine Siliziumdioxidverbindungen und weisen einen Kohlenstoffgehalt von weniger als 10 ppm, und insbesondere von weniger als 1 ppm auf. Ferner weisen die Siliziumstücke 18 keine störenden Gaseinschlüsse - wie dies bei Wirbelschicht- oder Fließbettreaktoren auftritt - auf.

Die Schüttdichte der Siliziumstücke 18 ist gegenüber der der Siliziumpartikel 11 entscheidend erhöht. Die Siliziumstücke 18 sind rieselfähig, chargierbar und konfektionierbar. Aufgrund der Reinheit und der Form der Siliziumstücke 18 sind diese unmittelbar zu poly- oder einkristallinen Silizium-Wafern für die Photovoltaik weiterverarbeitbar.

Dadurch, dass die Siliziumpartikel 11 unmittelbar nach ihrer Bildung in den freien Schmelzraum 6 eingeleitet werden und eine hohe Einkopplungs-Temperatur, welche sich günstig auf das induktive Schmelzen auswirkt, aufweisen, können diese energiesparend induktiv aufgeschmolzen werden. Dadurch, dass der Schmelzraum 6 ein Teil des Reaktor-Innenraums 4 und somit in den Reaktor 1 integriert ist, ist das Aufschmelzen direkt - ohne apparativen Aufwand - in das Herstellungsverfahren integriert. Der Schmelzraum 6 ist frei ausgebildet, so dass das Aufschmelzen der Siliziumpartikel 11 mit minimalem apparativen Aufwand erfolgt. Insbesondere ist ein Behälter zum Schmelzen der Siliziumpartikel 11 - wie dies in der US 4 354 987 vorgesehen ist - nicht erforderlich.

In einem alternativen Verfahren zur Herstellung von Silizium wird vor dem induktiven Schmelzen der Siliziumpartikel 11 mindestens ein Dotierungs-Element, beispielsweise Bor, zugeführt. Das Dotierungs-Element kann durch die Gas-Zuführ-Leitung 8 oder durch eine separate Leitung in den Reaktor-Innenraum 4 eingeleitet werden. Das Dotierungs-Element kann in Form einer und/oder mehrerer chemischer Verbindungen vor und/oder während der thermischen Zersetzung des Gases 2 zudosiert werden. Vorzugsweise wird das Dotierungs-Element derart zudosiert, dass in den Siliziumstücken 18 das Dotierungs-Element in einer Konzentration vorliegt, wie sie zur Weiterverarbeitung in der Photovoltaik benötigt wird.

Die bei dem thermischen Zersetzen des Gases 2 gebildeten Siliziumpartikel 11 werden mittels des Dotierungs-Elements, beispielsweise Bor, dotiert, was mit einer Erhöhung der freien Ladungsträger und somit mit einer Erhöhung der Leitfähigkeit verbunden ist. Durch die Erhöhung der Leitfähigkeit kann die für das induktive Schmelzen erforderliche Einkopplungs-Temperatur T im Vergleich zu undotierten Siliziumpartikeln 11 verringert werden. Dadurch, dass bei dotierten Siliziumpartikeln 11 die erforderliche Einkopplungs-Temperatur T geringer ist, kann das induktive Schmelzen der Siliziumpartikel 11 energiesparender erfolgen, wobei gleichzeitig die für das Weiterverarbeiten zu Silizium-Wafern für die Photovoltaik erforderliche Dotierung eingebracht wird.

## Patentansprüche

1. Verfahren zur Herstellung von Silizium, umfassend die folgenden Schritte:
a. Einbringen eines Silizium enthaltenden Gases (2) in einen Reaktor (1),
b. thermisches Zersetzen des Silizium enthaltenden Gases (2) unter Bildung von pulverförmigen Siliziumpartikeln (11) in einem Heizraum (5) des Reaktors (1),
c. induktives Schmelzen der pulverförmigen Siliziumpartikel (11) zu flüssigen Siliziumtröpfchen (16) in einem Schmelzraum (6) des Reaktors (1) mittels sich in den pulverförmigen Siliziumpartikeln (11) ausbildenden Wirbelströmen,
d. Verbinden von mehreren flüssigen Siliziumtröpfchen (16) zu einem flüssigen Siliziumtropfen (17) in dem Reaktor (1),
e. Erstarren des flüssigen Siliziumtropfens (17) zu einem festen Siliziumstück (18) in einem Erstarrungsraum (7) des Reaktors (1), und
f. Austragen des Siliziumstücks (18) aus dem Reaktor (1).

2. Verfahren nach Anspruch 1, **dadurch gekennzeichnet, dass** beim induktiven Schmelzen der freie Schmelzraum (6) von einem Magnetfeld durchsetzt wird.

3. Verfahren nach Anspruch 2, **dadurch gekennzeichnet, dass** sich das Magnetfeld periodisch mit einer Frequenz von 50 Hz bis 5000 kHz, insbesondere von 50 Hz bis 3000 kHz, und insbesondere von 50 Hz bis 2000 kHz, zeitlich ändert.

4. Verfahren nach einem der Ansprüche 1 bis 3, **dadurch gekennzeichnet, dass** die pulverförmigen Siliziumpartikel (11) beim Eintreten in den freien Schmelzraum (6) eine Einkopplungs-Temperatur (T) von mindestens 500 °C, insbesondere von mindestens 750 °C, und insbesondere von 1000 °C, aufweisen.

5. Verfahren nach einem der Ansprüche 1 bis 4, **dadurch gekennzeichnet, dass** vor dem induktiven Schmelzen mindestens ein Dotierungs-Element zugeführt wird.

6. Verfahren nach einem der Ansprüche 1 bis 5, **dadurch gekennzeichnet, dass** zumindest in den Erstarrungsraum (7) mindestens ein inertes Hilfsgas (10) derart eingeleitet wird, dass eine Abscheidung von flüssigem Silizium (16, 17) an einem Reaktor-Behälter (3) des Reaktors (1) vermieden wird.

7. Verfahren nach einem der Ansprüche 1 bis 6, **dadurch gekennzeichnet, dass** in dem Erstarrungsraum (7) eine Kühl-Temperatur (T_{K}) von weniger als 1410°C, insbesondere von weniger als 600°C, und insbesondere von weniger als 200°C, herrscht.

8. Verfahren nach einem der Ansprüche 1 bis 7, **dadurch gekennzeichnet, dass** zumindest in dem Erstarrungsraum (7) ein Druck (p) von mindestens 1100 mbar, insbesondere von mindestens 600 mbar, und insbesondere von mindestens 200 mbar, herrscht.

9. Reaktor zur Herstellung von Silizium, umfassend
a. eine Gas-Zuführ-Leitung (8) zum Einbringen eines Silizium enthaltenden Gases (2) in den Reaktor (1),
b. einen Reaktor-Behälter (3),
c. einen von dem Reaktor-Behälter (3) begrenzten Reaktor-Innenraum (4), mit
i. einem Heizraum (5),
ii. einem Schmelzraum (6), und
iii. einem Erstarrungsraum (7),
d. eine Heiz-Vorrichtung (12) zum thermischen Zersetzen des Silizium enthaltenden Gases (2) zu pulverförmigen Siliziumpartikeln (11) in dem Heizraum (5),
e. eine Induktions-Vorrichtung (13) zum induktiven Schmelzen der pulverförmigen Siliziumpartikel (11) in dem Schmelzraum (6) mittels sich in den pulverförmigen Siliziumpartikeln (11) ausbildenden Wirbelströmen,
f. eine Kühl-Vorrichtung (19) zum Erstarren von flüssigen Siliziumtropfen (17) zu festen Siliziumstücken (18) in einem Erstarrungsraum (7), und
g. eine Austrags-Leitung (20) zum Austragen der festen Siliziumstücke (18) aus dem Reaktor (1).
